# EUROPEAN PATENT APPLICATION

(11) **EP 4 296 812 A1**
(43) Date of publication of application: **27.12.2023**
(21) Application number: 23180494.9
(22) Date of filing: 21.06.2023
(51) Int. Cl.: G05B 19/418

(54) **SYSTEM AND METHOD FOR CONVEYOR SYSTEM CONFIGURATION**

(30) Priority: 23.06.2022 US 202263354849 P
(71) Applicant: ATS Corporation, Cambridge, Ontario N3H 4R7 (CA)
(72) Inventor: BEYAK, Lucas, Cambridge, Ontario, N3H 4R7 (CA); DOLGOVYKH, Anton, Cambridge, Ontario, N3H 4R7 (CA); KNAP, Graham Richard, Cambridge, Ontario, N3H 4R7 (CA); TAYLOR, Javan Kenneth, Cambridge, Ontario, N3H 4R7 (CA); WOJCIK, Patrick, Cambridge, Ontario, N3H 4R7 (CA); DREXLER, Simon, Cambridge, Ontario, N3H 4R7 (CA); HOPE, Ben, Cambridge, Ontario, N3H 4R7 (CA)
(74) Representative: Ipey

(57) **Abstract**

A method for automatic target configuration in a conveyor system, the method including: perform a pallet-flow analysis for a station; generate target and move configurations for the station; determine if there are more stations and perform the pallet flow analysis and the generate target and move configurations until all stations are completed; finalize routing targets' configurations; and finalize exit move configurations. A system for automatic target configuration in a conveyor system, the system including: a processor; a processor readable memory storing computer instructions, which, when executed by the processor, cause the processor to: perform a pallet-flow analysis for a station; generate target and move configurations for the station; determine if there are more stations and perform the pallet flow analysis and the generate target and move configurations until all stations are completed; finalize routing targets' configurations; and finalize exit move configurations.

## Description

### FIELD

The present disclosure relates generally to a system and method for conveyor system configuration. More particularly, the present disclosure relates to a system and method for conveyor system configuration of pallet movement among stations.

### BACKGROUND

Modern manufacturing and automation systems and processes are becoming more complex, at least in part because these systems and processes are required to be fast, accurate and repeatable over longer periods of time. These systems and processes are expected to provide appropriate product quality in short time frames. These automation systems and processes also seek to provide high machine efficiency with low downtime for maintenance, trouble-shooting and the like. For existing manufacturing and automation systems and processes, there is also a trend to provide ongoing improvement in one or more of these factors in order to keep pace with a changing manufacturing environment.

Some manufacturing and automation systems have complex requirements with respect to size and speed. When designing these systems, typically many parameters may need to be configured, monitored and/or adjusted to accommodate the manufacturing processes and the automation system. Further, as there tends to be significant capital expenditure needed for any purchase or modification of an automation system, purchasers prefer to ensure that the automation system will be capable of operation for the intended purpose at an appropriate throughput well in advance of the capital expenditure.

While some systems and methods for configuring automation equipment are known, they tend to be limited, for example, to modeling a system with significant manual configuration that can take a substantial amount of time. In particular, conventional systems have difficulty in planning and managing movement of pallets within a manufacturing or automation system.

As such, there is a need for improved systems and methods for configuring automation equipment, and particularly, conveyor systems and pallets in manufacturing and automation environments.

### SUMMARY

According to an aspect herein, there is provided a method for target configuration in a conveyor system, the method including: perform a pallet-flow analysis for a station; generate target and move configurations for the station; determine if there are more stations and perform the pallet flow analysis and the generate target and move configurations until all stations are completed; finalize routing targets' configurations; and finalize exit move configurations.

In some cases, the pallet-flow analysis may include: determine operation points within the station; determine if there are any pallets in-process at the station; if there are pallets in-process, calculate a required move distance by calculating a distance from the most downstream operation point to the most downstream unprocessed part and move in-process pallets forward by the calculated required move distance; determine if all operation points at the current station have been utilized, if no, add new pallets; mark processed parts by updating the processed status of parts that are currently at manufacturing operation points; and determine if all parts have been processed and if not, return to check on pallets in process, otherwise end the method.

In this case, the calculate a required move distance may include calculating a pallet offset.

In some cases, the generate target and move configurations may include: determine the most downstream and upstream pallet locations for the current station; configure a routing target and place the routing target upstream of the current station; determine if there is a new unique target set size, if yes, use the new targets and, if no, use the existing targets; determine if there are more processing steps, if yes, return to determine if there is a new unique target set size; determine if there are more substations; if yes, return to determine if there is a new unique target set size; configure pallet entry routings; configure in-station routings; and perform any additional routing target configuration.

In this case, the configure pallet entry routings may include configuring pallet offsets.

In some cases, the finalize routing targets' configurations may include: setting a routing target between the current station and the upstream neighboring station; or setting a conditional hover-routing target at a most upstream target of the current station.

In some cases, the finalize exit move configurations may include setting the destination target to be the most upstream pallet target for the subsequent station.

According to an aspect herein, there is provided a system for target configuration in a conveyor system, the system including: a processor; a processor readable memory storing computer instructions, which, when executed by the processor, cause the processor to: perform a pallet-flow analysis for a station; generate target and move configurations for the station; determine if there are more stations and perform the pallet flow analysis and the generate target and move configurations until all stations are completed; finalize routing targets' configurations; and finalize exit move configurations.

In some cases, the pallet-flow analysis may include computer instructions, which, when executed by the processor, cause the processor to: determine operation points within the station; determine if there are any pallets in-process at the station; if there are pallets in-process, calculate a required move distance by calculating a distance from the most downstream operation point to the most downstream unprocessed part and move in-process pallets forward by the calculated required move distance; determine if all operation points at the current station have been utilized, if no, add new pallets; mark processed parts by updating the processed status of parts that are currently at manufacturing operation points; and determine if all parts have been processed and if not, return to check on pallets in process, otherwise end the method.

In this case, the calculate a required move distance may include calculating a pallet offset.

In some cases, the generate target and move configurations may include computer instructions, which, when executed by the processor, cause the processor to: determine the most downstream and upstream pallet locations for the current station; configure a routing target and place the routing target upstream of the current station; determine if there is a new unique target set size, if yes, use the new targets and, if no, use the existing targets; determine if there are more processing steps, if yes, return to determine if there is a new unique target set size; determine if there are more substations; if yes, return to determine if there is a new unique target set size; configure pallet entry routings; configure in-station routings; and perform any additional routing target configuration.

In this case, the configure pallet entry routings may include configuring pallet offsets.

In some cases, the finalize routing targets' configurations may include: setting a routing target between the current station and the upstream neighboring station; or setting a conditional hover-routing target at a most upstream target of the current station.

In some cases, the finalize exit move configurations may include: setting the destination target to be the most upstream pallet target for the subsequent station.

Other aspects and features of the embodiments of the system and method will become apparent to those ordinarily skilled in the art upon review of the following description of specific embodiments in conjunction with the accompanying figures.

### FIGURES

Embodiments of the system and method will now be described, by way of example only, with reference to the attached Figures, wherein:
Fig. 1 is a diagram illustrating an example of a conveyor system configured by an embodiment of a system and method herein;
Fig. 2 is a block diagram illustrating an embodiment of a system for conveyor configuration according to an embodiment;
Fig. 3 is a flow chart for a method for conveyor configuration, testing and diagnosis according to an embodiment;
Fig. 4 illustrates an example of a simulation of a conveyor system in which some elements have been hidden;
Fig. 5 is a flowchart showing an embodiment of a method for conveyor system configuration;
Fig. 6 is a flowchart showing an embodiment of a pallet-flow analysis 505 performed for each station on the conveyor system;
Fig. 7 illustrates the method for pallet-flow analysis for a station having 3 operation points operating simultaneously;
Fig. 8 is a flowchart illustrating the target and move configuration generation 515 from Fig. 5; and
Figs. 9A to 9H are screen shots from an animation illustrating the operation of a conveyor with targets configured based on the methods described above.

### DETAILED DESCRIPTION

The following description, with reference to the accompanying drawings, is provided to assist in understanding the example embodiments. The following description includes various specific details to assist in that understanding but these are to be regarded as merely examples. Accordingly, those of ordinary skill in the art will recognize that the various embodiments described herein and changes and modifications thereto, including the use of elements of one embodiment with elements of another embodiment, can be made without departing from the scope and spirit of the appended claims and their equivalents. In addition, descriptions of well-known functions and constructions may be omitted for clarity and conciseness.

The terms and words used in the following description and claims are not limited to their bibliographical meanings but are meant to be interpreted in context and used to enable a clear and consistent understanding.

Generally, the present document provides for a system and method for conveyor system configuration for use in automation. In particular, one example of a type of conveyor that is becoming popular in automation is a linear motor conveyor. Conveyors in an automation environment will typically have a plurality of automation stations placed along the conveyor as well as moving elements, which may include at least one carrier/pallet per moving element, configured to move a part into and/or out of an automation station. The conveyor system and each automation station will have a variety of parameters that can be configured, monitored, and adjusted. These parameters generally need to be configured properly in order for the conveyor and related automation stations to properly function and, further, the parameters generally need to be monitored over time for diagnosis, error detection and the like.

It will be understood that automation stations are used on manufacturing or production lines to handle manufacturing operations. An automation station may include a single piece of equipment/machine in a production line, such as a press, pick&place device, camera, sensor or the like, but may also include a complex system involving robots, conveyors, manipulators, sensors and the like. Typically, an automation station will have an operation point or operation location at which an operation will be performed on a part on a pallet.

Conventional systems for the configuration of conveyors and assembly lines generally have difficulty analyzing configurations of conveyor systems, including linear motor conveyor systems, with a level of specificity or granularity that may be required to determine whether a conveyor system would be operable given various parameters that may need to be configured or adjusted within the overall system. For example, parameters such as spacing, timing, trajectory, temperature, collision avoidance and the like, play a role in the final configuration of the conveyor system.

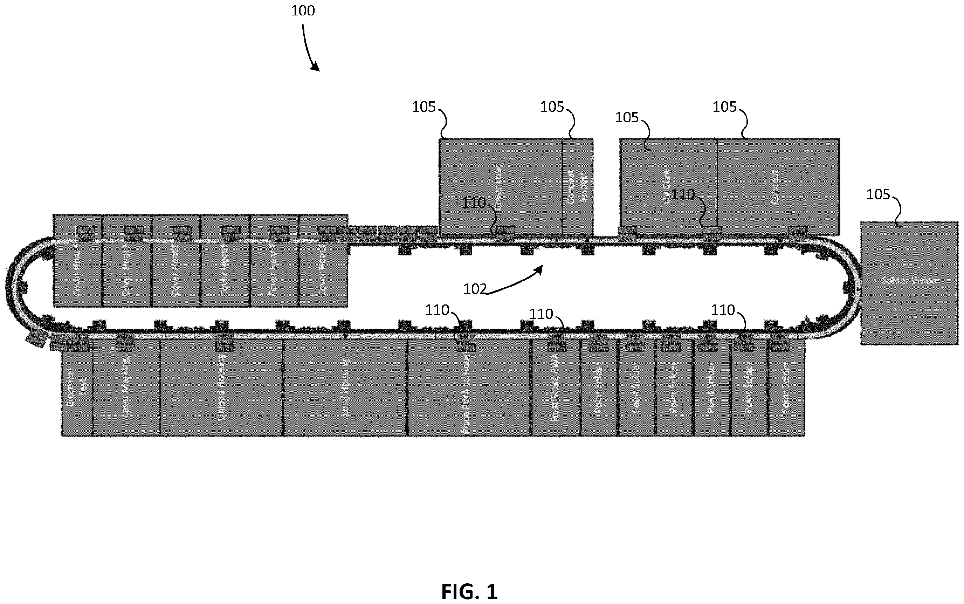

Figure 1 shows an example configuration/simulation of a conveyor system 100. In this case, the conveyor system is a linear motor conveyor system including a track providing a linear motor that drives moving elements along the track using magnetic fields. The conveyor system (sometimes referred to as a production line) 100 generally includes a conveyor 102 and at least one automation station, or automation element, 105 (which in the current example includes 23 automation stations 105). As noted above, the automation stations 105 may be or include, for example, machines, sensors, devices, or equipment, or a combination of machines, devices, or equipment, or the like. Each automation station 105 may require a certain amount of processing time and may further include spacing and temperature requirements. As can be seen from Fig. 1, various types of automation stations require different spacing amounts. Further, automation stations may have a particular order. Further, for timing, cost and processing requirements, it may be beneficial to have a plurality of a type of automation station that performs one task (sometimes called "parallel processing" or "2-up or 3-up processing" or the like), while in other cases, there may be a single automation station that performs a task (sometimes called "serial processing" or the like).

The conveyor 102 includes moving elements 110 that are configured to travel on the conveyor 102, stopping at one or more target set points ("targets") that relate to various automation/manufacturing stations 105 in order to have the automation station function/operation applied to an item or object ("part or product") being carried by the moving element 110. In some cases, there may further be loading or unloading stations where the products or items are placed on or removed from the moving elements. Designing and configuring a conveyor system 100 includes configuring various configuration parameters such that the moving elements will proceed through the one or more automation stations with a high throughput while reducing the number of positions where there are bottlenecks within the conveyor system 100. Further, the moving elements 110 are intended to move from position to position without colliding and ensuring, proper orientation for processing at each automation station. There are also various operational parameters that come into play once the conveyor system 100 is operating. For example, temperature of elements of the conveyor system is an example of an operational parameter that needs to be monitored during operation of the conveyor system. As the moving elements 110 move over the conveyor system 102, heat can be generated in various ways, such as contact between a moving element and a track of the conveyor system or due to the operation of the motors/drivers for the conveyor system or the like. An appropriate operating temperature is to be maintained in order to reduce wear and tear and down time for the conveyor system 100.

In configuring a conveyor system, many configuration and operational parameters need to be managed and/or monitored in order to make sure that the conveyor system can operate and then optimize the throughput and functions of the operation of the conveyor system. In particular, prior to spending significant capital, customers of conveyor systems want to ensure that the conveyor system will work as required and will not experience excessive downtime. As such, embodiments of the system and method detailed herein are intended to provide for a configuration of the conveyor system given input parameters, operating parameters, and the like, including movement profiles and targets for pallets, that will address the needs of the customer. Embodiments of the system and method detailed herein are further intended to provide a visualization and/or simulation of a completed conveyor system to, for example, determine whether there may be issues with configuration or operational parameters, including motion profiles, spacing/layout, throughput, power, temperature or the like.

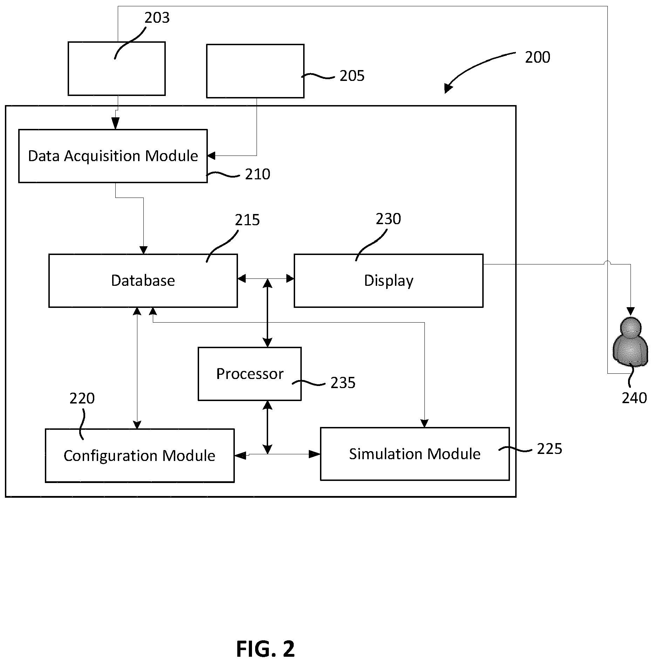

Figure 2 illustrates a system 200 for conveyor system configuration according to an embodiment. The system includes an input module 203, a connection to an external data source 205, a data acquisition module 210, a database 215, a configuration module 220, a simulation module 225, a display 230, and at least one processor 235.

The data acquisition module 210 is configured to allow input of and/or receive data related to various parameters related to a conveyor system. For example, there may be an input device 105 for inputting data related to automation stations that may be placed in the conveyor system. There may be access to one or more outside data sources 205 for data from third party data sources, for example site configuration, new equipment parameters and the like. The data acquisition module 210 may also obtain various parameters from the database 215 such as, for example, previously saved data relating to known or previously input conveyor system elements or the like. The input or received data may be stored in the database 215 or the like. As will be understood, the database 215 may be distributed across one or several memories and may be accessed via a network or the like.

The configuration module 220 is configured to review the input data to determine the parameters related to configuration of the conveyor system. The configuration module takes input data, for example, relating to size of work area, size of automation stations, number of automation stations, fixture size for parts being transported, throughput, ordering, timing, and the like and prepares a configuration of the conveyor system, including placing workstations and arranging the conveyor (track and moving elements) for a visualization of the conveyor system. The configuration module 220 displays a potential configuration of the conveyor system on the display 230 based on the configuration parameters. The configuration module 220 allows for further input and adjustments to be made with regard to the elements of the conveyor system, including at least the automation stations and the conveyor, by, for example, a user or users 240. In some cases, the system may provide for drag-and-drop functionality, for example, if a user wants to add a new automation station to the conveyor system or the like. After each change is made or after a group of changes are made, the configuration module 220 determines if the configuration of the conveyor system continues to be functional based on the parameters. Generally speaking, the configuration module 220 is configured to review the input data and configuration parameters and determine if there are any conditions (sometimes called "alerts") that might make it impossible or unlikely to provide a functioning conveyor system with the desired automation stations, desired throughput and the like. It will be understood that there may be many types of input data and related configuration parameters, including for example, products processed at each station at a time, the pitch between stopping locations of moving elements, parallel automation stations, station processing time, station reset time and the like.

The simulation module 225 is configured to simulate and analyze operation of the configured conveyor system. As the simulation module 225 operates a simulation of the conveyor system, the operation can be visualized/displayed on the display 230. The display may include a graphical representation of the operating conveyor system and possibly some of the operating parameters that are being monitored.

As will be understood, the configuration module 220 and the simulation module 225 may be further enhanced via machine learning, artificial intelligence or the like based on results from previously designed and implemented conveyor systems.

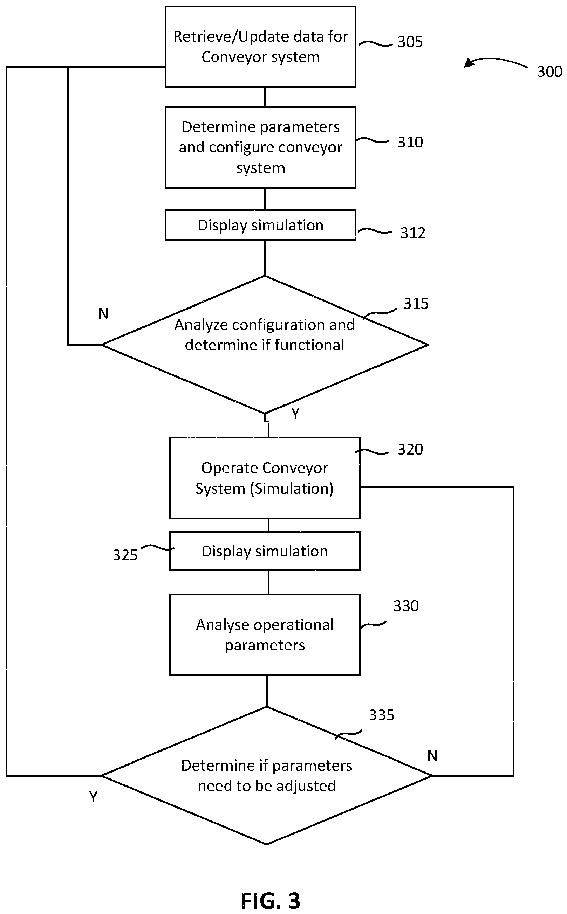

Figure 3 illustrates a method 300 for conveyor system configuration according to an embodiment. At 305, the system receives or determines input data for the conveyor system. In some cases, the system receives an updated configuration, either via an automatic process or via operator input, in order to adjust for a potential issues or error in configuration/simulation, as described further below. At 310, the system determines configuration parameters for the conveyor system based on the input data. In particular, the input data and the configuration parameters determined from the input data may include, for example, size of the conveyor system, flow direction, number of moving elements (pallets), dimensions and weight/mass of the moving elements, general characteristics of the product(s) to be transported by the moving elements (including size and weight/mass), processing or automation stations (size, processing time, and the like), automation station order and/or configuration, motion profiles for the moving elements, and the like. In some cases, configuration parameters such as moving element velocity and acceleration may be input data or a predetermined set point, in other cases, the velocity and acceleration may be calculated based on distances, processing time and the like. In some cases, at 312, the system may display a layout and/or simulation of the conveyor system as presently configured. At 315, the configuration parameters can be analyzed to determine if a functional conveyor system can be configured with those configuration parameters. If no, the method can indicate the nature of the issue and return to retrieve further input and or to re-configure the conveyor system by adjusting the configuration parameters based on machine learning or the like. For example, if the initial configuration specified a number of moving elements that did not allow for the required throughput, the system may add additional moving elements to allow for improved throughput. If the configuration is functional, at 315, the method continues.

At 320, the system begins simulating operation of the configured conveyor and displays the simulation at 325.

At 330, the system monitors and analyses operational parameters, which may be calculated based on operational data produced by the simulation. As these operational parameters are reviewed by the system, the system is configured to model actual operation of a conveyor and note any operational warnings, errors, or issues. In some cases, the system will include a machine learning model that has been prepared based on actual operating conveyor systems. Further description of the preparation and operation of the machine learning model is described below. Generally speaking, the simulation models operating parameters such as power, temperature, movement of moving elements, and the like to represent actual values that could be obtained in a real world implementation of the configured conveyor.

At 335, the system determines if any operational parameters need adjustment or reveal any alerts (e.g. warnings, faults, errors, issues or the like) that might impact the operation of the conveyor system. If there are any adjustments/alerts, the system can indicate the adjustment and/or nature of the alert and return to 305 to retrieve further input and/or to provide further input/updates to re-configure the conveyor system by adjusting the configuration parameters based on machine learning or the like. If no adjustments or alerts are indicated, the system can return to the simulated conveyor operation.

Embodiments of the method and system detailed herein are further intended to be used in testing the conveyor system, diagnosing conveyor system issues and optimization of the conveyor system. The system is intended to simulate the operation of the conveyor system and determine the impact on various operational parameters. In particular, the system may review operational parameters such as power and thermal measurements, pallet placement and motion profiles, throughput, automation station configuration, and the like. In some cases, the system may include machine learning or artificial intelligence modules that can learn from feedback from actual operational conveyor systems, and in particular linear motor conveyor systems, to determine potential alerts (e.g. warnings, faults, errors and the like) and provide for troubleshooting. As noted herein, a simulation can also serve as a "digital twin" for the actual conveyor system once it is produced. This will allow for changes to be made to the simulation in advance in order to check if a change should be made to the actual conveyor system.

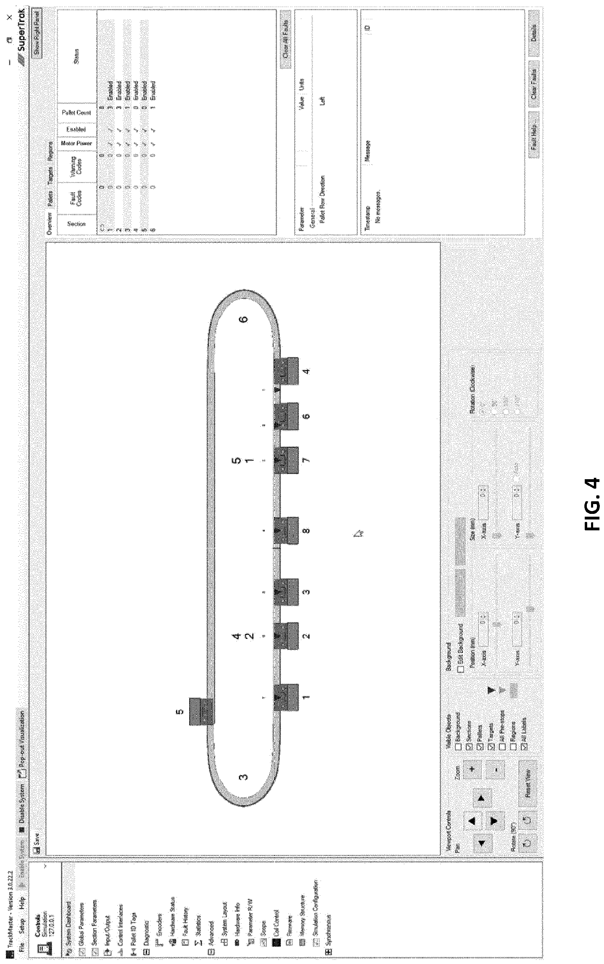

Figure 4 illustrates an example display of the simulated operation of a conveyor system. In this particular case, the display screen has been set to show moving elements and target locations with the automation stations hidden. In some cases, the display may provide alerts to highlight areas for follow up or correction/changes and may provide for a button or the like to clear all alerts/faults that are known. In some cases, the display may illustrate targets for the moving elements or the like to show when a moving element is positioned at a target. It is intended that the display provides for a detailed view of a live simulation of a configured conveyor system.

One of the configuration parameters that can be generated when configuring a conveyor system relates to the motion profiles and positioning (targets) of the pallets/moving elements at each station as the moving elements move from station to station and within stations along the conveyor track. This can be complex because the motion profiles and positioning need to take into account variables such as the throughput, cycle time, pre-stop locations, offset movements, and the like of the automation station as well as the handling and control of the other moving elements to avoid collisions, conflicts or the like. The following discussion relates to the automatic setting of targets at stations within a system for configuration of a conveyor system.

In the following description, various terms may be helpful in understanding embodiments of the system and method herein.

Station: a processing area where a part will be processed in a manufacturing operation performed at an operation point or points within the station, typically by a device like a pick&place, an end effector of a robot, a sensor, or the like. The number of manufacturing operations (operation points) within a station can also be configured.

Exit Station: A station where pallets are directed when leaving their current station, that is, an identification for the next station where the pallet will be processed.

Substation: A station may have duplicated places for manufacturing operations for the purpose of processing multiple pallets in parallel to increase part production. A substation is a subset of a station where each substation does the same operation(s).

Operation Point/Location: A position/location where a manufacturing operation within a station will be carried out or interact with a part on a pallet or the like.

Pallet: An object that is moved around the conveyor system for the purpose of transporting a part through the processing sequence.

Pallet Gap: The distance that will be preserved by the pallet collision avoidance system between queuing pallets.

Part: An object that sits on top of a pallet that requires processing through a sequential set of stations.

Processing Step: A part on a pallet will be processed by operations, generally according to a repeating pattern. A processing step in a pallet-flow analysis relates to a set of pallets in particular locations relative to the operations.

Target: A reference location generally used for stopping pallets.

Target Simultaneous Processing: A set of targets can be configured to process pallets simultaneously. This means pallets may move into position at a target but will wait to process until all targets in the configuration set are in position. Then all pallets process at the same time and are released simultaneously.

Conditional Hover-routing Target: When a target is configured to route a pallet when that pallet passes over the target, it will only perform that routing if the pallet's current destination is set to this target.

Routing Target: A target responsible for routing incoming pallets to the correct target destination for the routing target's respective station.

Move Configuration: A description of where and how to move a pallet. A target can specify one or more move configurations for its routing.

Pallet Entry Routing: A move configuration that is directing pallets to their first location within a station.

In-station Routing: A move configuration that is directing a pallet to an additional location within a station, or out of the station to the exit station.

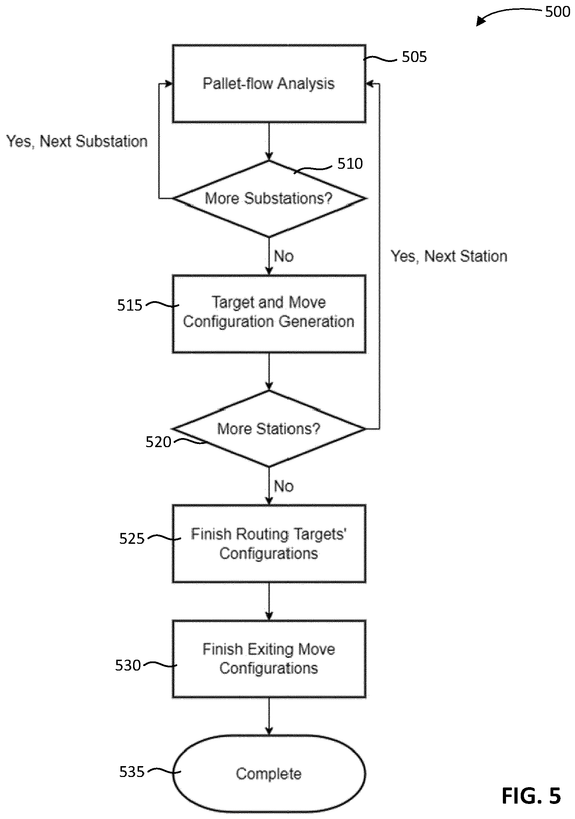

Figure 5 is a flowchart showing an embodiment of a method for automatic target configuration in a conveyor system 500. The method 500 and sub-methods thereof can be performed by, for example, the configuration module 220 and/or processor 235. Target configuration can be a complicated process and the automatic target configuration allows the system to be used by people that have not spent a lot of time with conveyor design methodologies but have an understanding of the manufacturing or assembly line desired.

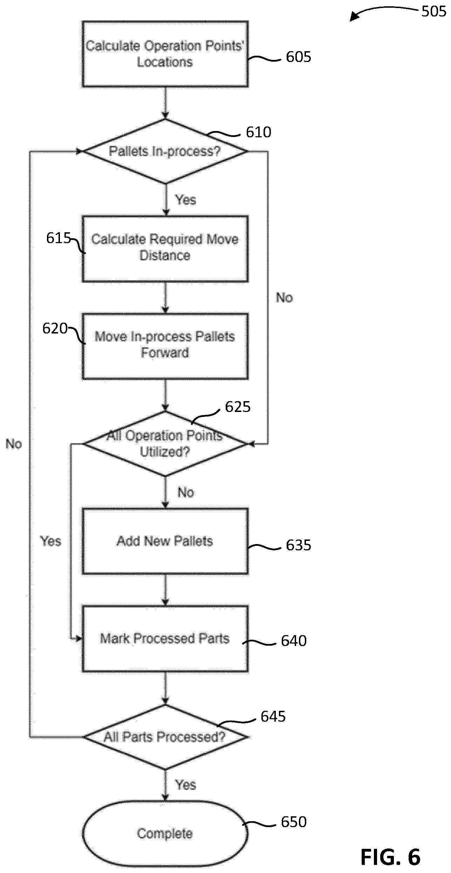

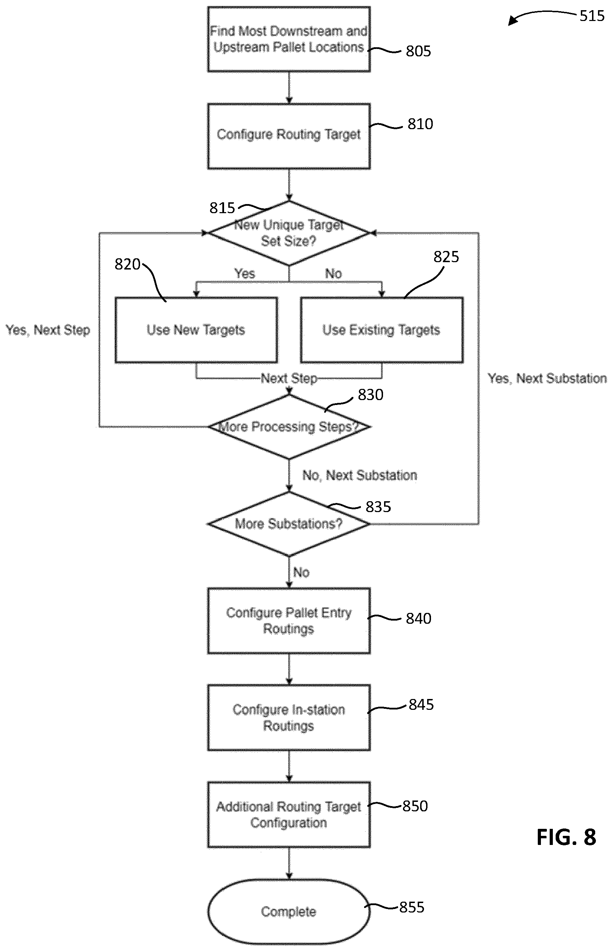

The method begins with performing a pallet-flow analysis for a station 505. The pallet-flow analysis is described in a flowchart in Figure 6. In some cases, a station may include substations. As such, the method then determines if there are more substations to be analyzed 510. If so, the method returns to perform pallet-flow analysis for the next substation. If not, then the method moves to target and move configuration generation 515, which is described in more detail in Figure 8.

Next, the method determines if there are more stations to be processed 520. If so, the method returns to the pallet-flow analysis for the next station. If not, the method then finalizes the routing targets' configurations 525.

In routing targets' configurations 525, the method configures the location of the routing targets and, if appropriate, sets the routing target's conditional routing target. This information is known at this point because the information depends on the most upstream and downstream pallet locations of the preceding station. The location of the routing targets is set to be at least slightly downstream of the most downstream pallet location of the previous station. A conditional hover-routing target can be set to be the most upstream target of that routing target's station.

The method then proceeds to finalize the exit move configurations 530. In particular, the method configures the destination target of all move configurations used when exiting stations. For every move configuration that directs pallets out of a station to the exit station, the destination target is set to the target used for the most upstream pallet location. This is typically the same target specified as a conditional hover-routing target in the routing target configuration at 525. Following the finishing exit move configurations 530, the method completes at 535.

Figure 6 is a flowchart showing an embodiment of a pallet-flow analysis 505 performed for each station on the conveyor system. The pallet flow analysis 505 is performed to determine positioning/movement of notional pallets at a station to set targets and offsets for the simulation.

The method 505 begins with calculating manufacturing operation points/locations within the station (or substation) 605. This involves determining the locations of all the manufacturing operation points so that parts can later be positioned relative to these locations.

The method then determines if there are any pallets in-process 610 at the station. This could involve determining if any pallet is involved in a previous processing step. As will be understood, in a first iteration, there won't be any pallets-in-process.

If there are pallets in-process, then the method calculates a required move distance 615 by calculating a distance from the most downstream manufacturing operation to the most downstream unprocessed part. At 620, the method moves in-process pallets forward by the calculated distance from the previous step. If there are no pallets in-process, the method moves ahead to determine if all manufacturing operation points have been utilized 625.

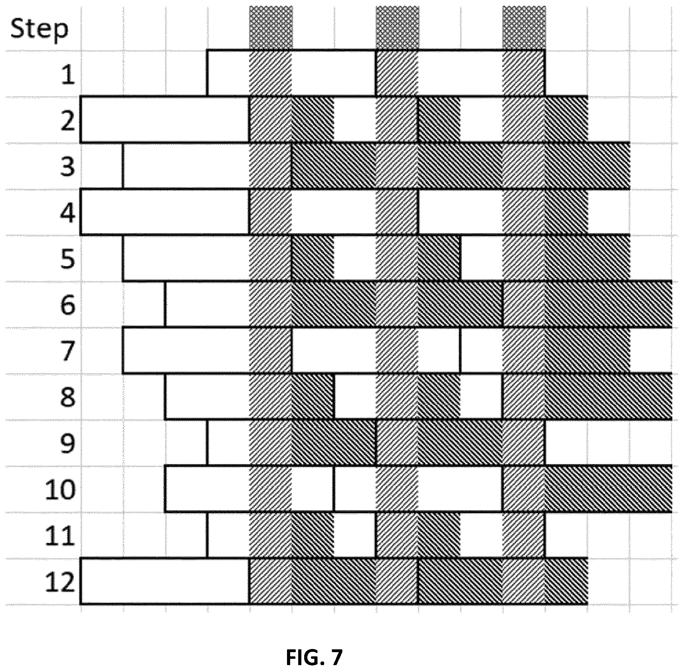

At 625, the method determines if all manufacturing operation points at the current station have been utilized. In other words, the method checks to see if there are parts at all manufacturing operation points. If no, then the method proceeds to add new pallets at 635. In a notional sense, new pallets may be added in advance and queue up, typically against the most upstream pallet as illustrated in Fig. 7 below.

If all manufacturing operation points are utilized at 625 or after adding new pallets at 635, the method proceeds to mark processed parts 640 by updating the processed status of parts that are currently at manufacturing operation points.

At 645, the method determines if all parts have been processed. In particular, the method checks if all parts on the current in-process pallets have been processed. If no, the method returns to check on pallets in process at 610. If yes, the method proceeds to completion at 650.

Figure 7 illustrates the method for pallet-flow analysis for a station having three operation points operating simultaneously. In this case, each pallet carries 4 parts (sometimes called a 4x1 Box). In Fig. 7, cross-hatched - manufacturing operation points within the station; White - Unprocessed Parts; diagonal sloped to the right- In-process Parts; diagonal sloped to the left - Processed Parts.

The label on the left indicating "step", relates to processing in accordance with the method of Fig. 6. In particular, each step is drawn at the stage of marking in-process parts.

Prior to step 1, the method determines the operation points and that there are no pallets in-process yet. As such, all manufacturing operation points are not currently utilized, so 2 pallets are added (in an actual conveyor - pallets would be physically moved forward if not already at the target).

At step 1, parts 1 and 4 on pallet 1, and part 3 on pallet 2 are processed and then marked as processed. The method determines that all parts are not processed so returns to determine pallets in-process.

In step 2, there are 2 pallets in-process and the method determines that the required move distance is 1 part length. As such, the method moves pallet 1 and pallet 2 forward one part length (this will typically be done based on an offset from the initial pallet target). The method then determines that all manufacturing operations are currently utilized. Part 2 on pallet 1, and parts 1 and 4 on pallet 2 are processed and marked as such. At step 2, a pallet 3 is shown queued against pallet 2 but it could alternatively be added as noted below for step 3. Again, all parts are not processed so the method returns to determine pallets in-process.

In step 3, there are 2 pallets in-process. Again, the required move distance is 1 part length (adjustment typically made by offset) and the method moves pallet 1 and pallet 2 forward 1 part length. At this point, all manufacturing operations are not currently utilized, so the method adds 1 pallet (pallet 3). At this point, a new target may be needed in order to accommodate the new pallet (see description below with regard to Fig. 8). Part 3 on pallet 1, part 2 on pallet 2 and part 1 on pallet 3 are processed and marked as such. Again, all parts are not processed so the method returns to determine pallets in-process.

The method continues in a similar way for steps 4-11.

At step 12, there are 2 pallets in-process. The required move distance is 1 part length, so the method moves pallet 1 and pallet 2 forward 1 part length. All manufacturing operation points are currently utilized. In this case, even though there is a 3^{rd} pallet illustrated as being at the station, it is not needed until the next iteration of the method. The method then processes and marks part 2 on pallet 1, and parts 1 and 4 on pallet 2. At this stage, all parts have been processed, so the pallet-flow analysis is complete and can restart for subsequent pallets and parts.

Figure 8 is a flowchart illustrating the target and move configuration generation 515 from Fig. 5. At 805, the method finds the most downstream and upstream pallet locations with regard to the station being configured. A station's most downstream location can be used to place the downstream neighboring station's routing target and a station's most upstream location can be used as the destination target of the preceding station's exit move configuration.

At 810, the method configures a routing target. In particular, target configuration options can be set so that pallets passing over the routing target will be directed to the proper destination locations in the current station. The routing target is typically placed between the current station and the nearest upstream neighboring station and, in most cases, closer to the upstream neighboring station, so that the information from the routing target can be acted on to bring pallets to the correct locations in the current station.

At 815, the method determines if there is a new unique target set size. If yes, the method, at 820, uses the new targets and, if no, the method, at 825, uses the existing targets. As an example, if a station has 3 steps, and step 1 has 2 target locations for pallets, step 2 has 3 target locations, and step 3 has 2 target locations, then in step 1 we are first encountering a step with 2 locations, which would be considered a new unique set size of 2. In step 2 it would be the first encounter of 3 locations, so that would be considered a new unique set size of 3. In step 3 it would be encountering 2 locations again, so that would not be considered a new unique set size. In each case when a new target set size is needed, the target locations configuration can be adjusted.

When using the new targets, there will generally be a new unique number of pallet locations, and hence required targets. In this case, a target will be placed at each pallet location. When using existing targets, there can be the same number of pallet locations as a previous step but there may also be an offset to allow for multiple parts on a pallet or the like and the method can reference an existing target set. In all cases, the target sets can be recorded for later use or the like.

At 830, the method determines if there are more processing steps. If yes, the method returns to determine if there is a new unique target set size at 815. If no, the method determines if there are more substations to perform the same target analysis on at 835. If yes, the method returns to determine if there is a new unique target set size at 815. If no, the method proceeds.

At 840, the method configures pallet entry routings. In particular, a set of pallet entry routings (a type of move configuration) will be configured and will also be referenced later when configuring the cyclic routing of the routing target. In configuring the pallet entry routings, there are cases where the required pallet target locations for each entry may not exactly equal the locations of the existing targets. For pallet locations when this is true, an offset can be calculated and used to route the pallet to an offset from the target.

At 845, the method configures in-station routings. This process is similar to configuring the pallet entry routings (840), except that there can be extra complexity because instead of only routing a single pallet into an entry position, there can be multiple pallets to be simultaneously released from a set of targets in a processing step.

At 850, the method performs any additional routing target configuration that may be required. In particular, the routing target for a station may be configured to cyclically route incoming pallets to the correct entry locations of the station. In this case, the previously recorded pallet entry routings can be referenced to perform this configuration. Then, at 855, the method completes.

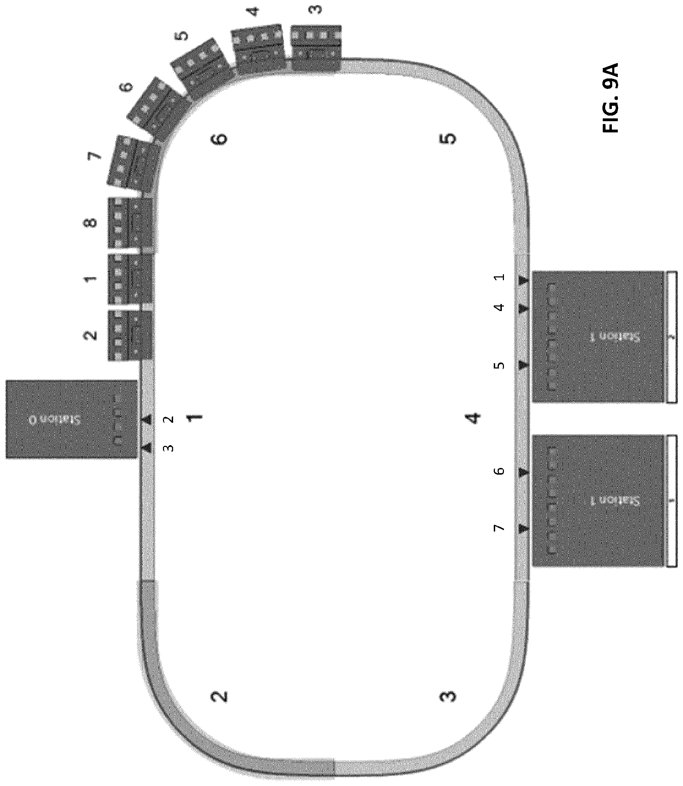

Figures 9A to 9H are screen shots from an animation illustrating the operation of a conveyor with targets configured based on the methods described above. Fig. 9A illustrates pallets/moving elements in starting positions. In this example, there are 8 pallets, labelled as 1 through 8, with each pallet carrying 4 parts. There are two manufacturing stations, station 0, which is a stand-alone station, and station 1, which includes two substations. There are also 6 track sections labeled as 1 through 6.

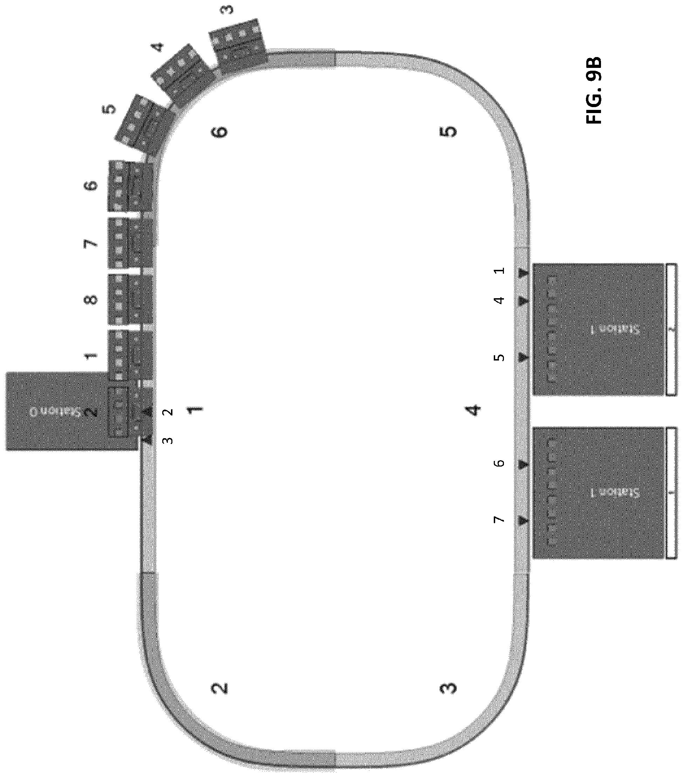

Fig. 9B illustrates pallet 2 positioned at station 0. At this time, pallet 2 is processed by having station 0 operate on each of the 4 parts on pallet 2.

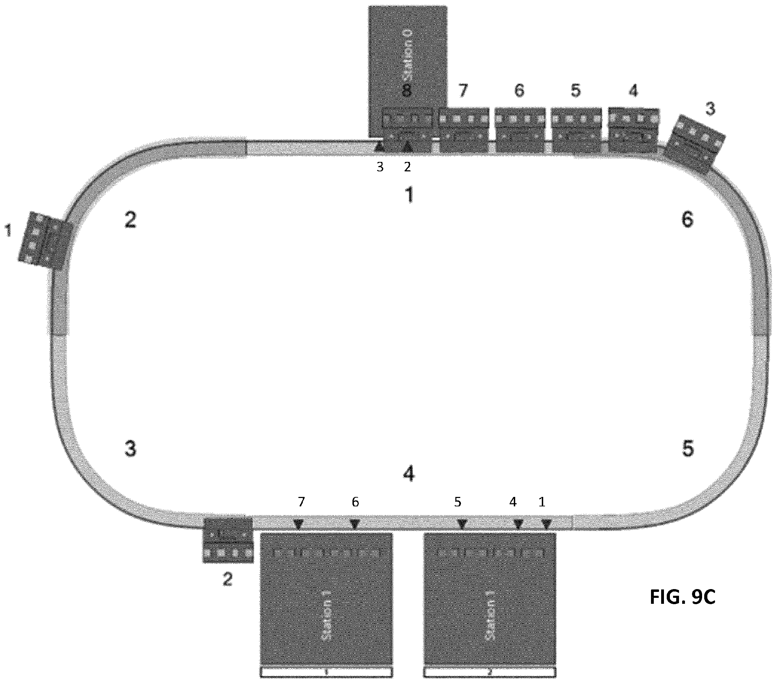

Fig. 9C illustrates pallets 1 and 2 released from Station 0 and moving to Station 1. As shown, pallet 8, and the parts thereon, is now being processed at station 0.

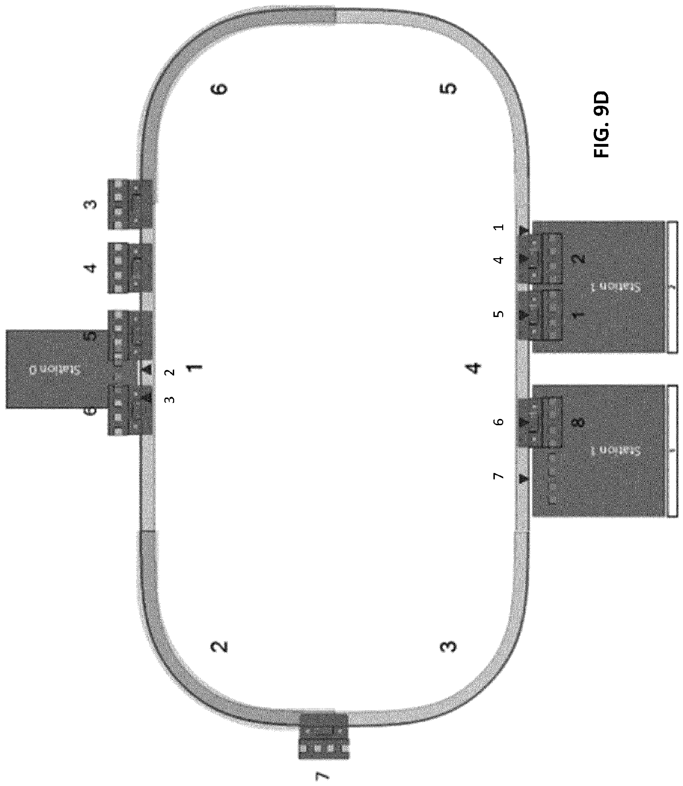

Fig. 9D illustrates pallets 1, 2 and 8 waiting at station 1 while pallet 7 moves from Station 0 to Station 1. As shown, pallet 6 is leaving station 0 and pallet 5 is moving into station 0 for processing.

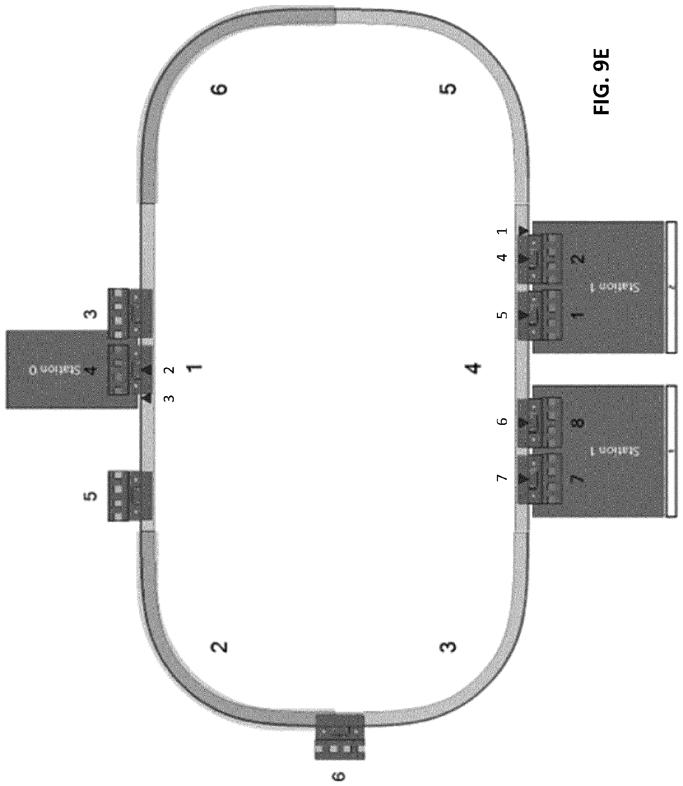

Fig. 9E illustrates pallets 1, 2, 8 and 7 in position at station 1 for processing. Pallets 6 and 5 are moving toward station 1 and pallet 4 is being processed at station 0.

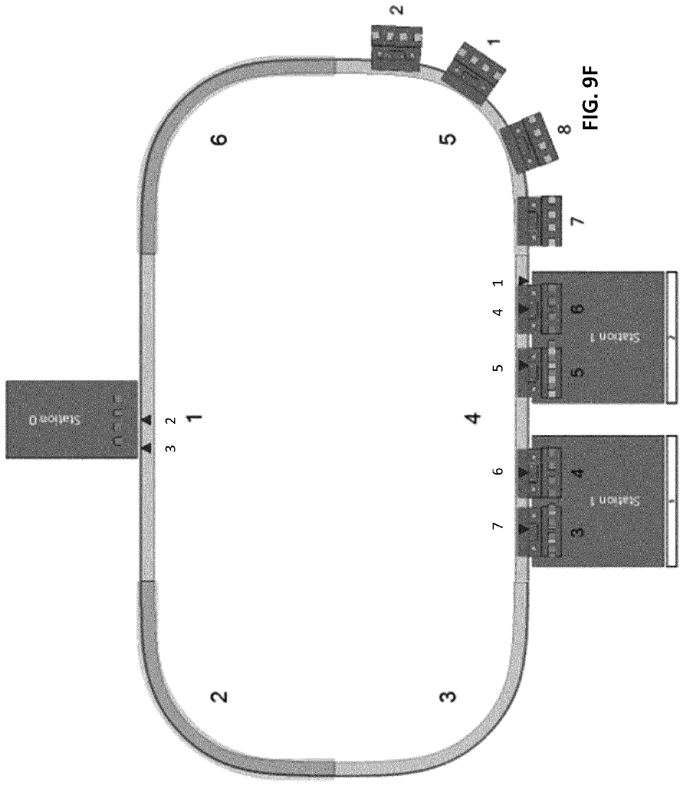

Fig. 9F illustrates pallets 1, 2, 8 and 7 have been released from station 1 and are moving to station 0. Pallets 6, 5, 4 and 3 are moving into position at station 1 for processing.

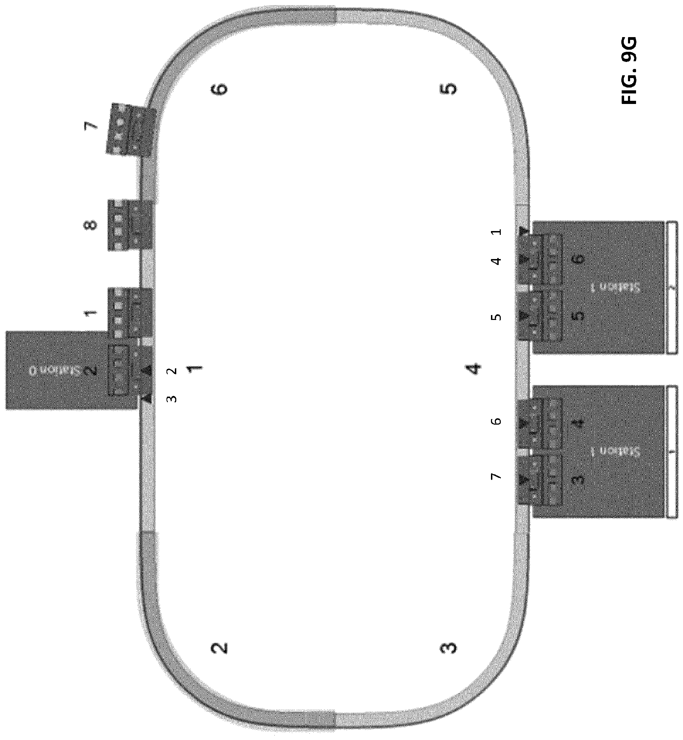

Fig. 9G illustrates pallets 2, 1, 8 and 7 restarting the process at station 0 while pallets 6, 5, 4 and 3 are finishing processing at station 1.

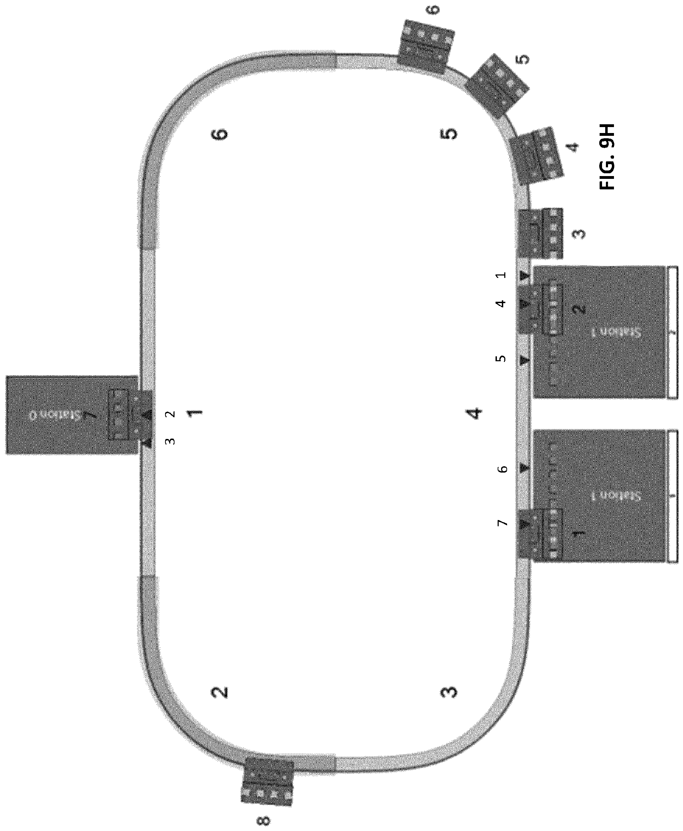

Fig. 9H illustrates pallets 6, 5, 4 and 3 once released from station 1 while pallets 2, 1, and 8 are moving to station 1 and pallet 7 is finishing processing at station 0. At this point, processing at station 1 has completed a full cycle for pallets 1 to 8.

It is intended that embodiments of the system and method herein provide for users to easily configure a conveyor system, and in particular, a linear motor conveyor system, with motion control parameters such that a simulation of the configured conveyor system can be run to test the conveyor system operation.

In the preceding description, for purposes of explanation, numerous details are set forth in order to provide a thorough understanding of the embodiments herein. However, it will be apparent to one skilled in the art that these specific details may not be required. In other instances, well-known structures or circuits may be shown in block diagram form in order not to obscure the overall system or method. For example, specific details are not provided as to whether the embodiments described herein are implemented as a software routine, hardware circuit, firmware, or a combination thereof.

Embodiments can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described embodiments can also be stored on the machine-readable medium. Software running from the machine-readable medium can interface with circuitry to perform the described tasks.

The above-described embodiments are intended to be examples only. Elements of one embodiment may be used with other embodiments and not all elements may be required in each embodiment. Alterations, modifications and variations can be effected to the particular embodiments by those of skill in the art without departing from the scope of the invention, which is defined solely by the claims appended hereto.

## Claims

1. A method for automatic target configuration in a conveyor system, the method comprising:
perform a pallet-flow analysis for a station;
generate target and move configurations for the station;
determine if there are more stations and perform the pallet flow analysis and the generate target and move configurations until all stations are completed;
finalize routing targets' configurations; and
finalize exit move configurations.

2. A method according to claim 1, wherein the pallet-flow analysis comprises:
determine operation points within the station;
determine if there are any pallets in-process at the station;
if there are pallets in-process, calculate a required move distance by calculating a distance from the most downstream operation point to the most downstream unprocessed part and move in-process pallets forward by the calculated required move distance;
determine if all operation points at the current station have been utilized, if no, add new pallets;
mark processed parts by updating the processed status of parts that are currently at manufacturing operation points; and
determine if all parts have been processed and if not, return to check on pallets in process, otherwise end the method.

3. A method according to claim 2, wherein the calculate a required move distance comprises calculating a pallet offset.

4. A method according to any one of claims 1 to 3, wherein the generate target and move configurations comprises:
determine the most downstream and upstream pallet locations for the current station;
configure a routing target and place the routing target upstream of the current station;
determine if there is a new unique target set size, if yes, use the new targets and, if no, use the existing targets;
determine if there are more processing steps, if yes, return to determine if there is a new unique target set size;
determine if there are more substations; if yes, return to determine if there is a new unique target set size;
configure pallet entry routings;
configure in-station routings; and
perform any additional routing target configuration.

5. A method according to claim 3, wherein the configure pallet entry routings comprises configuring pallet offsets.

6. A method according to any one of claims 1 to 5, wherein the finalize routing targets' configurations comprises:
setting a routing target between the current station and the upstream neighboring station; or
setting a conditional hover-routing target at a most upstream target of the current station.

7. A method according to any one of claims 1 to 6, wherein the finalize exit move configurations comprises: setting the destination target to be the most upstream pallet target for the subsequent station.

8. A system for target configuration in a conveyor system, the system comprising:
a processor;
a processor readable memory storing computer instructions, which, when executed by the processor, cause the processor to:
perform a pallet-flow analysis for a station;
generate target and move configurations for the station;
determine if there are more stations and perform the pallet flow analysis and the generate target and move configurations until all stations are completed;
finalize routing targets' configurations; and
finalize exit move configurations.

9. A system according to claim 8, wherein the pallet-flow analysis comprises computer instructions, which, when executed by the processor, cause the processor to:
determine operation points within the station;
determine if there are any pallets in-process at the station;
if there are pallets in-process, calculate a required move distance by calculating a distance from the most downstream operation point to the most downstream unprocessed part and move in-process pallets forward by the calculated required move distance;
determine if all operation points at the current station have been utilized, if no, add new pallets;
mark processed parts by updating the processed status of parts that are currently at manufacturing operation points; and
determine if all parts have been processed and if not, return to check on pallets in process, otherwise end the method.

10. A system according to claim 9, wherein the calculate a required move distance comprises calculating a pallet offset.

11. A system according to any one of claims 8 to 10, wherein the generate target and move configurations comprises computer instructions, which, when executed by the processor, cause the processor to:
determine the most downstream and upstream pallet locations for the current station;
configure a routing target and place the routing target upstream of the current station;
determine if there is a new unique target set size, if yes, use the new targets and, if no, use the existing targets;
determine if there are more processing steps, if yes, return to determine if there is a new unique target set size;
determine if there are more substations; if yes, return to determine if there is a new unique target set size;
configure pallet entry routings;
configure in-station routings; and
perform any additional routing target configuration.

12. A system according to claim 11, wherein the configure pallet entry routings comprises configuring pallet offsets.

13. A system according to any one of claims 8 to 12, wherein the finalize routing targets' configurations comprises:
setting a routing target between the current station and the upstream neighboring station; or
setting a conditional hover-routing target at a most upstream target of the current station.

14. A system according to any one of claims 8 to 13, wherein the finalize exit move configurations comprises: setting the destination target to be the most upstream pallet target for the subsequent station.
